# EUROPEAN PATENT SPECIFICATION

(11) **EP 3 523 745 B1**
(45) Date of publication and mention of the grant of the patent: **25.08.2021**
(21) Application number: 17883588.0
(22) Date of filing: 22.12.2017
(51) Int. Cl.: G06F 21/62, H04L 9/32, G06F 21/51, G06F 21/53

(54) **ELECTRONIC DEVICE, METHOD FOR CONTROLLING THEREOF AND COMPUTER-READABLE RECORDING MEDIUM**
ELEKTRONISCHE VORRICHTUNG, VERFAHREN ZUR STEUERUNG DAVON UND COMPUTERLESBARES AUFZEICHNUNGSMEDIUM
DISPOSITIF ÉLECTRONIQUE, SON PROCÉDÉ DE CONTRÔLE, ET SUPPORT D'ENREGISTREMENT LISIBLE PAR ORDINATEUR

(30) Priority: 22.12.2016 KR 20160176452
(43) Date of publication of application: 14.08.2019
(73) Proprietor: Samsung Electronics Co., Ltd., Suwon-si, Gyeonggi-do 16677 (KR)
(72) Inventor: LEE, Chang-woo, Suwon-si, Gyeonggi-do, 16677 (KR); LEE, Nam-gwon, Suwon-si, Gyeonggi-do, 16677 (KR)
(74) Representative: Gulde & Partner
(86) International application number: PCT/KR2017/015382
(87) International publication number: WO 2018/117747

(56) References cited:
- KR-A- 20140 112 392
- KR-A- 20140 112 399
- KR-B1- 101 453 742
- US-A1- 2014 237 531
- US-A1- 2016 142 418
- US-B1- 8 255 991
- Yury Zhauniarovich: "Android Security (and Not) Internals", , 16 June 2014 (2014-06-16), XP055432388, Retrieved from the Internet: URL:http://www.zhauniarovich.com/files/asa ni/asani.pdf [retrieved on 2017-12-06]
- DAVID BARRERA ET AL: "Understanding and improving app installation security mechanisms through empirical analysis of android", PROCEEDINGS OF THE SECOND ACM WORKSHOP ON SECURITY AND PRIVACY IN SMARTPHONES AND MOBILE DEVICES, SPSM '12, 1 January 2012 (2012-01-01), page 81, XP055091631, New York, New York, USA DOI: 10.1145/2381934.2381949 ISBN: 978-1-45-031666-8

## Description

### Technical Field

Apparatuses and methods consistent with the present disclosure relate to an electronic apparatus, a method for controlling thereof and a computer-readable recording medium, and more particularly, to an electronic apparatus capable of further efficiently controlling an access to a resource of an application, a method for controlling thereof and a computer-readable recording medium.

### Background Art

With the development of electronic technology, electronic apparatuses have been enabled to be connected to the internet using communication networks, and to provide users with various contents and the like using the same. In recent electronic apparatuses such as smart phones and smart TVs, various applications can be installed, and thus users can install various applications that they need and use the same. Patent documents US8255991 B1, US2016292450 A1, US2013097659 A1 and publications Yury Zhauniarovich: "Android Security (and Not) Internals", 16 June 2014 and DAVID BARRERA ET AL: "Understanding and improving app installation security mechanisms through empirical analysis of android", January 2012 comprise teachings related to the field of the invention.

Certain applications to be installed and used in such electronic apparatuses sometimes require authority for accessing the information and resources stored in the electronic apparatuses or to collect the information, and telephone applications require authority for accessing contact information stored in the electronic apparatuses.

Conventional applications store access control information that may be used when accessing the information and resources stored in the electronic apparatuses, in a separate file. Specifically, conventional applications store the access control information of each execution file that includes the information on the resources of the electronic apparatus that should be accessed by each of a plurality of execution files, in one separate file. Accordingly, an electronic apparatus receives from users confirmation on whether to allow access to each resource in the process where an application is being installed, and stores the access control information and whether to allow the access, in a memory inside a kernel of the electronic apparatus. Then, whenever the user executes the application and thus an execution file tries to access the resource, the electronic apparatus can control the access by the execution file to the resource using the access control information inside the memory.

In such a case, however, simply hacking the files where the access control information is stored in the application or hacking the files of the access control information stored in the memory of the electronic apparatus can enable the application to access the resources and collect information not approved by the user, and cause a problem where the electronic apparatus may be infected by a malicious code through the application.

Accordingly, there is need for a technology to control the access to resources more safely.

### Disclosure of Invention

### Technical Problem

A purpose of the present disclosure is to resolve the aforementioned problems of prior art, that is, to provide an electronic apparatus capable of further efficiently controlling access to a resource of an application, a method for controlling thereof and a computer-readable recording medium. The invention is specified as defined by the appended independent claims.

### Solution to Problem

An electronic apparatus according to an embodiment of the present disclosure includes a storage configured to store an application program that includes an execution file and access control information related to the execution file to be used to access a resource of the electronic apparatus; and a processor configured to, in response to an execution command regarding the stored application program being input, execute the execution file of the stored application program, and to control access of the execution file regarding the resource of the electronic apparatus according to the access control information included in the stored application program.

In this case, the access control information may be included in the execution file.

Meanwhile, the execution file may include an electronic signature encoded from the execution file and the access control information based on a predetermined algorithm, and the processor may determine whether the execution file and the access control information are modulated, and grant the access authority of the resource of the electronic apparatus to the stored application program according to a result of determination of modulation.

In this case, the predetermined algorithm may include a hash function, and the electronic signature may be a value encoded from a hash code regarding the execution file and the access control information by using a private key, the hash code being computed using the hash function.

In this case, the storage may store a public key corresponding to the private key, and the processor, in response to the execution command regarding the stored application program being input, may compute the hash code regarding the execution file and the access control information using the hash function, and determine whether modulation is made by comparing the hash code computed after the execution command is input and the hash code encoded from the electronic signature using the public key.

Meanwhile, the resource of the electronic apparatus may include at least one of location information of the electronic apparatus, a camera, a microphone, a speaker, and a stored file, and an external server connected to the electronic apparatus.

Meanwhile, the stored application program may include a plurality of execution files each including at least one access control information, and the processor, in response to at least one of a plurality of access control information being changed, may update only the access control information included in the execution file of which the access control information is changed, of the plurality of execution files.

Meanwhile, the processor may further include a volatile memory to temporarily store data, and stores the access control information included in the execution file of which the resource access authority regarding the resource is granted, in the volatile memory.

Meanwhile, a method for controlling an electronic apparatus according to an embodiment of the present disclosure may include storing an application program that includes an execution file and access control information related to the execution file to be used to access a resource of the electronic apparatus; receiving input of an execution command regarding the stored application program; controlling access authority of the execution file regarding the resource of the electronic apparatus according to the access control information included in the stored application program; and driving the stored application program using the execution file and an access authority of the execution file regarding the resource.

In this case, the access control information may be included in the execution file.

Meanwhile, the execution file may include an electronic signature encoded from the execution file and the access control information based on a predetermined algorithm, and the controlling of access of the execution file regarding the resource may include determining whether the execution file and the access control information are modulated, using the electronic signature; and granting the access authority regarding the resource of the electronic apparatus to the stored application program according to a result of determination of modulation.

In this case, the predetermined algorithm may include a hash function, and the electronic signature may be a value encoded from a hash code regarding the execution file and the access control information by using a private key, the hash code being computed using the hash function.

In this case, the method may further include storing a public key corresponding to the private key, and the determining of whether the execution file and the access control information are modulated may include in response to the execution command regarding the stored application program being input, computing the hash code regarding the execution file and the access control information using the hash function; encoding the electronic signature using the public key; and determining whether modulation is made by comparing the hash code computed after the execution command is input and the hash code encoded from the electronic signature.

Meanwhile, the resource of the electronic apparatus may include at least one of location information of the electronic apparatus, a camera, a microphone, a speaker, and a stored file, and an external server connected to the electronic apparatus.

Meanwhile, the stored application program may include a plurality of execution files each including at least one access control information, and the method may further include, in response to at least one of a plurality of access control information being changed, updating only the access control information included in the execution file of which the access control information is changed, of the plurality of execution files.

Meanwhile, the method may further include, in response to the execution command regarding the stored application program being input, temporarily storing the access control information included in the execution file of which the resource access authority regarding the resource is granted, in a volatile memory.

### Advantageous Effects of Invention

According to an embodiment of the present disclosure, there is provided a computer readable recording medium including a program for executing a method for controlling an electronic apparatus, the method including storing an application program that includes an execution file and access control information related to the execution file to be used to access a resource of the electronic apparatus; receiving input of an execution command regarding the stored application program; controlling access authority of the execution file regarding the resource of the electronic apparatus according to the access control information included in the stored application program; and driving the stored application program using the execution file and the access authority of the execution file regarding the resource.

### Brief Description of Drawings

The above and/or other aspects of the present invention will be more apparent by describing certain embodiments of the present disclosure with reference to the accompanying drawings, in which:
FIG. 1 is a block diagram provided to explain a configuration of an electronic apparatus according to an embodiment of the present disclosure;
FIG. 2 is a block diagram illustrating a specific configuration of the electronic apparatus of FIG. 1;
FIG. 3 is an execution file package structure according to an embodiment of the present disclosure;
FIG. 4 is a view provided to explain an access control system of the electronic apparatus according to an embodiment of the present disclosure;
FIG. 5 is a flowchart provided to explain a method for controlling the electronic apparatus according to an embodiment of the present disclosure; and
FIG. 6 is a flowchart illustrating a digital signature authentication method of the electronic apparatus according to an embodiment of the present disclosure.

### Best Mode for Carrying out the Invention

In describing the present disclosure, if a specific description of a related well-known function or configuration is deemed to obscure the gist of the present disclosure, its detailed description is omitted. The terms used in the present specification are terms defined in consideration of the functions of the present disclosure. However, these terms may vary depending on the intention or relationship of the user or operator. Therefore, their definitions shall be made based on the overall contents of the present specification.

The terms including numerical expressions such as a first, a second and the like may be used to explain various components, but there is no limitation thereto. These terms are used only for the purpose of differentiating one component from others.

The terms used in the present disclosure are used only to describe a certain embodiment, and not to limit the scope of rights. A singular expression includes a plural expression unless clearly mentioned otherwise. In this specification, terms such as "include/including" and "consists of/consisting of' should be construed as designating that there are such characteristics, numbers, steps, operations, elements, components or a combination thereof in the specification, not to exclude the presence or possibility of adding one or more of other characteristics, numbers, steps, operations, elements, components or a combination thereof.

In the embodiments of the present disclosure, a 'module' or 'unit' performs at least one function or operation, and may be realized as hardware or software or a combination thereof. Further, a plurality of 'modules' or a plurality of 'units' may be integrated into at least one module and realized as at least one processor except for 'modules' or 'units' that need to be realized as hardware.

Hereinafter, embodiments of the present disclosure will be described in detail with reference to the drawings attached such that they may be easily carried out by a person skilled in the art. However, the present disclosure may be realized in various forms, and is not limited to the embodiments described herein. Further, in the drawings, any portion irrelevant to clearly describing the present disclosure is omitted, and throughout the specification, like reference numerals indicate like configurations.

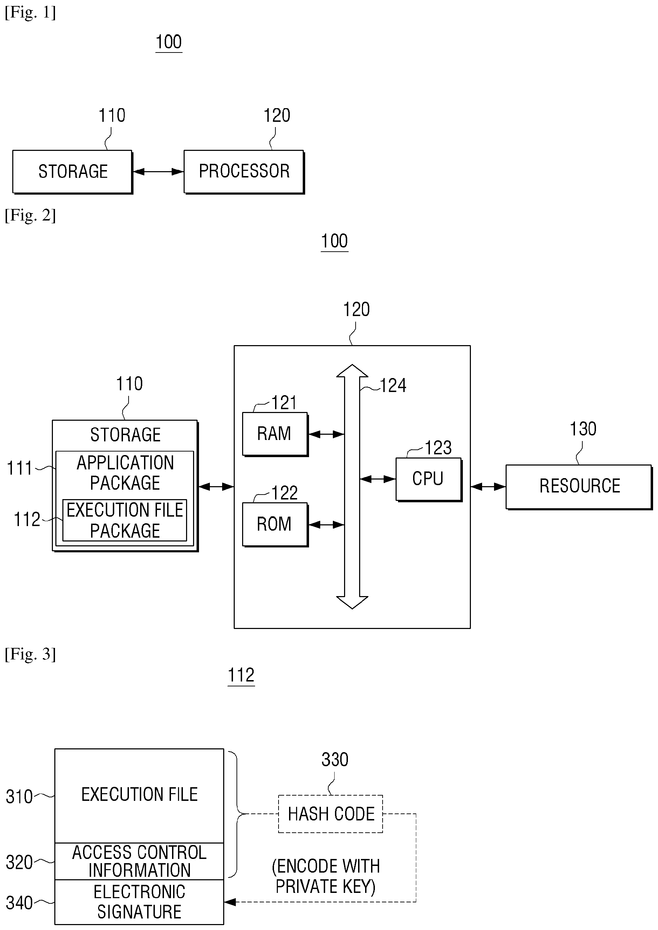

FIG. 1 is a block diagram provided to explain a configuration of an electronic apparatus according to an embodiment of the present disclosure.

Referring to FIG. 1, the electronic apparatus according to an embodiment of the present disclosure includes a storage 110 and a processor 120.

Specifically, the electronic apparatus 100 may be realized as various types of apparatuses such as TVs, PCs, laptop PCs, mobile phones, table PCs, PDAs, MP3 players, kiosks, electronic picture frames and the like. In the case the electronic apparatus 100 is realized as a portable type of apparatus such as a mobile phone, tablet PC, PDA, MP3 player, laptop PC and the like, the electronic apparatus 100 may be called a mobile device, but herein, it will be called the electronic apparatus 100.

The storage 110 may store various programs and data needed for operations of the electronic apparatus 100. The storage 110 may be realized as a volatile memory, nonvolatile memory, flash-memory, hard disk drive (HDD) or solid state drive (SSD) and the like. The storage 110 may be accessed by a processor 120, and reading/ recording/modifying/deleting/updating and the like of data may be performed by the processor 120. Here, the term, storage, may include a memory card (not illustrated) (example: micro SD card, memory stick) that may be mounted on the storage 110 or the electronic apparatus 100.

Specifically, the storage 110 may store a program, that is a collection of various commands necessary for operating the electronic apparatus 100. Here, the program may include an application (or an application program) for providing a certain service.

Here, the application may include one or a plurality of execution files capable of driving the application. Here, the execution file refers to a computer file for performing an instructed operation according to a coded command. The execution file may require accessing a resource depending on the instructed operation. Examples of the execution file include files that include interpreters such as scripts or byte codes, commands for the CPU or virtual machine and the like. For example, the execution files may be files having an extension such as '.exe' in MS-DOS or Windows. Representative execution files are elf files in Linux, and files having an extension such as '.dex' in an android app and the like, but there is no limitation thereto.

Here, the application program may further include access control information to be used to control the resource access of the application program. Specifically, access control information associated with at least one execution file may be stored in the application program in the form that it is included in the execution file that corresponds to each access control information. For example, the application program may attach the access control information related to each of the at least one execution file to the last part of each execution file and store the same. Here, the access control information may include information on the electronic apparatus 100 that needs to be accessed when the corresponding execution file is being executed. Here, one or a plurality of access control information may be attached to one execution file. For example, the access control information may include information on at least one resource of the electronic apparatus 100 that needs accessing of the corresponding execution file in the form of a list.

Here, the resource may be a configuration provided in the electronic apparatus 100. Specifically, the resource may be at least one of a camera, microphone, and speaker provided in the electronic apparatus 100, and location information and files of the electronic apparatus 100 stored in the storage 110. Meanwhile, the resource may be a separate external server distinguished from the electronic apparatus 100. Specifically, the resource may be an internet site or another electronic apparatus that may be connected through the internet and the like.

Meanwhile, the application may attach to the last part of the access control information the electronic signature for confirming whether the execution file and access control information are modulated. Here, the electronic signature may be one that is encoded from the execution file and access control information based on a predetermined algorithm. Here, the predetermined algorithm may be a hash function. However, the electronic signature may not be necessary attached to the last part of the access control information, and thus as long as it is possible to distinguish between the electronic signature and the execution file, the electronic file may be attached to a front part of the execution file.

Accordingly, the storage 110 may store the application, at least one execution file included in the application, at least one access control information included in each execution file, and the electronic signature for confirming whether a modulation is made.

Meanwhile, the detailed structure of the application package as one mentioned above will be explained in detail with reference to FIG. 3.

The processor 120 is a configuration for controlling the overall operations of the electronic apparatus 100. Specifically, the processor 120 controls the overall operations of the electronic apparatus 100 using various programs stored in the storage 110.

When an execution command regarding the application is input, the processor 120 may drive the application using the execution file included in the application. Here, the processor 120 may determine the resource access authority regarding the application according to the access control information included in the execution file.

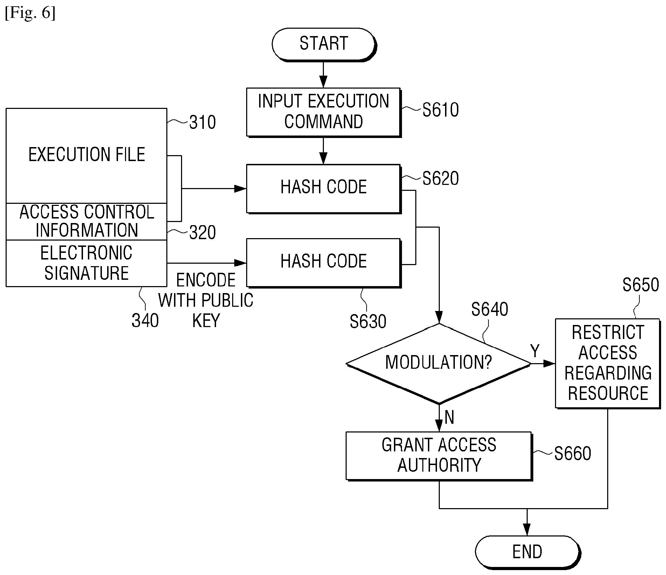

Specifically, the processor 120 may certify the electronic signature encoded from the execution file and access control information to confirm whether the execution file and access control information are modulated, and determine the resource access authority regarding the application according to the confirmation result. The process for determining the resource access authority will be explained in detail hereinafter with reference to FIG. 6.

Meanwhile, when the access control information is changed, the processor 120 may update the access control information included in the application. Specifically, when the access control information of at least one execution file of a plurality of execution files is changed, the application may update only the access control information included in the execution file of which the access control information of a plurality of access control information is changed.

According to the present disclosure, the access control information regarding the application is configured as a separate file, and thus compared to the conventional method where the entirety of files had to be updated even when a portion of the access control information had been changed, only the changed access control information may be updated, thereby reducing the time and memory being spent in updating.

Meanwhile, the processor 120 may further include a volatile memory for temporarily storing data. Specifically, when an application execution command is input, the processor 120 may confirm whether the execution file and access control information are modulated and determine the resource access authority of the application, and store the access control information included in the execution file where the resource access authority is granted in the volatile memory.

Further, when an application execution command is input again, the processor 120 may use the access control information stored in the volatile memory without a certifying process and drive the application. Meanwhile, in the case where the data loaded onto the volatile memory is deleted and then an application execution command is input such as when the power of the electronic apparatus 100 is turned off and then turned on again, the processor 120 may perform a certification process regarding the execution file and access control information and store in the volatile memory again the access control information for which the certification is completed.

As such, according to the present disclosure, by storing the access control information for which certification is completed in the volatile memory, it is possible to secure both the simplification of the execution process and the effect of maintaining security in executing the application.

FIG. 2 is a block diagram illustrating a specific configuration of the electronic apparatus of FIG. 1.

Referring to FIG. 2, the electronic apparatus 100 may include the storage 110, processor 120 and resource 130.

The storage 110 may store a package 111 (hereinafter referred to as application package) of the installed application. For convenience of explanation, it is illustrated that one application package 111 is stored in the storage 110 of the electronic apparatus 100, but in reality there may be a plurality of application packages 111 stored in the storage 110.

Meanwhile, the application package 111 stored in the storage 110 may include an execution file package 112. Specifically, the execution file package 112 may include an execution file for driving the application, access control information included in the execution file and an electronic signature encoded from the execution file and access control information. This will be explained in detail with reference to FIG. 3 hereinafter. Meanwhile, for convenience of explanation, it is illustrated there is one execution file package 112 included in the application package 111, but in reality, there may be a plurality of execution file packages included in the application package 111.

The processor 120 may include a RAM 121, ROM 122, CPU 123 and bus 124. The RAM 121, ROM 122 and CPU 123 may be connected to one another through the bus 124.

The CPU 123 accesses the storage 110, and performs booting using the O/S stored in the storage 110. Further, the CPU 123 may decode commands, and perform operations using various programs, contents, data and the like stored in the storage 110.

In the ROM 122, command sets and the like for system booting are stored. When a turn-on command is input and power is supplied to the electronic apparatus 100, the CPU 123 copies the O/S stored in the storage 110 to the RAM 121 according to the commands stored in the ROM 122, and executes the O/S to boot the system. When the booting is completed, the CPU 123 may copy the various programs stored in the storage 110 to the RAM 121, and execute the program copied to the RAM 121 to perform various operations.

Meanwhile, when an execution command regarding the installed application is input, the processor 120 may perform a certification on the plurality of execution files included in the application and the plurality of access control information corresponding to the plurality of execution files and determine the access authority regarding the application. Here, the processor 120 may store the access control information for which the certification is completed in the RAM 121 that is a volatile memory. Specifically, the CPU 123 of the processor 120 may store in the RAM 121 the access control information included in the execution file of which the resource access authority is granted as a result of the certification, of the plurality of access control information of the application stored in the storage 110.

Further, the processor 120 may enable the application to access the resource 130 using the access control information stored in the RAM 121. Here, the application accessing the resource 130 may mean the processor 120 controlling the operations of the resource 130 or collecting the information from the resource 130 and processing the same using the execution file and access control information of the application.

Hereinabove, it was explained that the processor 120 includes only one CPU 123, but in reality, the processor 120 may be realized as a plurality of CPUs (or DSP, SoC and the like).

The resource 130 may be a configuration provided in the electronic apparatus 100. Specifically, the resource may be at least one of a GPS chip (not illustrated), video processor (not illustrated), camera (not illustrated), microphone (not illustrated), speaker (not illustrated), communicator (not illustrated) and audio processor (not illustrated) provided in the electronic apparatus 100, and location information and files of the electronic apparatus 100 stored in the storage 110.

The GPS chip is a configuration element for receiving a GPS signal from a GPS (Global Positioning System) to compute the current location of the electronic apparatus 100. When using a navigation application or when the current location of the user is needed, the processor 120 may use the GPS chip to compute and use the user location, or use the GPS chip to use the location information of the electronic apparatus 100 pre-computed and stored in the storage 110.

The video processor is a configuration element for processing the video data included in the contents received through the communicator or included in the contents stored in the storage 110. In the video processor, various image processing such as decoding, scaling, noise filtering, frame rate conversion, resolution conversion and the like regarding the video data may be performed.

The audio processor is a configuration element for processing the audio data included in the contents received through the communicator or included in the contents stored in the storage 110. In the audio processor, various processing such as decoding or amplification, noise filtering and the like regarding the audio data may be performed.

When an application for reproducing multimedia contents is executed, the processor 120 may drive the video processor and the audio processor to reproduce the corresponding contents.

The speaker outputs the audio data generated in the audio processor.

The microphone is a configuration for receiving input of a user's voice or other sound and converting the same into audio data. The processor 120 may use the user's voice being input through the microphone in a call process, or convert the user's voice into audio data and store the same in the storage 110. Meanwhile, the microphone may be configured as a stereo microphone that receives sound inputs in a plurality of locations.

The camera is a configuration for photographing a stilled image or video according to user control. The camera may be realized as a plurality of cameras including a front camera and a rear camera. As aforementioned, the camera may be used as a means to obtain a user's image in an embodiment for tracking a user's eye direction.

When a camera and a microphone are provided, the processor 120 may perform control operations according to user's voice being input through the microphone or user's motions being perceived by the camera. That is, the electronic apparatus 100 may operate in a motion control mode or in a voice control mode. In the case of operating in the motion control mode, the processor 120 activates the camera to photograph the user, and tracks the changes of motion of the user and performs control operations corresponding thereto. In the case of operating in the voice control mode, the processor 120 may analyze the user's voice input through the microphone, and operate in a voice recognition mode control operations are performed according to the analyzed user's voice.

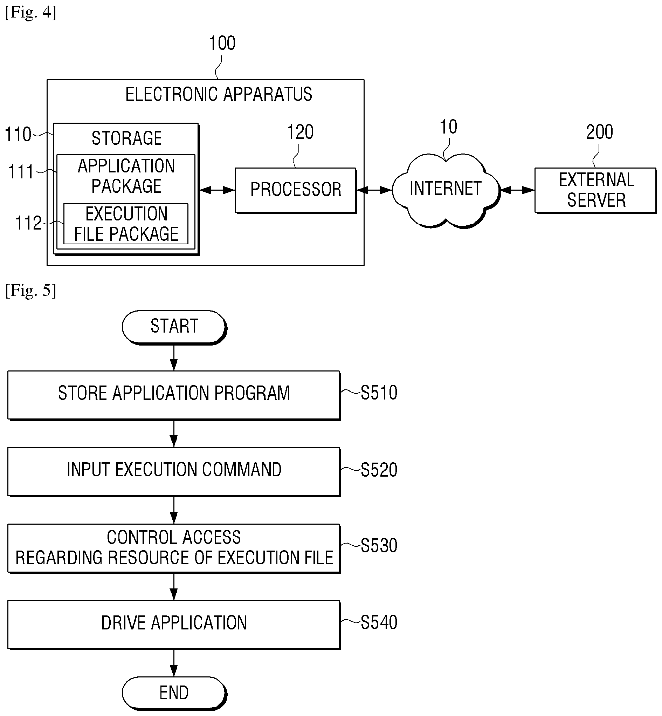

Meanwhile, the resource may be an external server separate from the electronic apparatus 100 or another electronic apparatus. Specifically, the resource may be an external server or another electronic apparatus and the like that may be connected through an internet site. This will be explained in detail hereinafter with reference to FIG. 4.

Meanwhile, the storage 110 and processor 120 of FIG. 2 have the same configurations as the storage and processor of FIG. 1, and thus repeated explanation will be omitted.

Besides the aforementioned, although not illustrated in FIG. 2, in some embodiments, a display without a touch screen or a touch input function, a USB port to which a USB connector may be connected, various external input ports for connection to various external terminals such as headset, mouse, LAN and the like, DMB chip for receiving and processing DMB(Digital Multimedia Broadcasting) signals, various sensors and the like may of course be further included.

FIG. 3 is a view illustrating an execution file package structure according to an embodiment of the present disclosure.

Referring to FIG. 3, the execution file package 112 includes an execution file 310, access control information 320 and electronic signature 340.

In the execution file 310, various commands for driving an application may be included. Further, the execution file 310 may include access control information regarding the resource that is necessary when driving the application. Specifically, the access control information 320 may be attached to the last part of the execution file 310. However, there is no limitation thereto, and thus the access control information 320 may be attached to the first part of the execution file 310 instead.

Meanwhile, the access control information 320 attached to the execution file 310 may include only the information on the resource necessary for driving the application using the execution file 310. Specifically, information on the resource necessary for driving the application using another execution file may be included in the access control information attached to that another execution file.

The execution file 310 may further include an electronic signature 340 encoded from the execution file 310 and access control information 320 based on a predetermined algorithm. Here, the predetermined algorithm may include a hash function. Specifically, the electronic signature 340 may be a value of a hash code 330 regarding the execution file 310 and access control information 320 that are encoded using a private key. Here, the hash code 330 may be one that is computed regarding the execution file 310 and access control information 320 using the hash function.

Meanwhile, although it was explained that an electronic signature may be generated using a hash code and a private key, there is no limitation thereto, and thus any data encoding technology may be used.

As such, since the electronic signature generated by encoding together the execution file and the access control information regarding the execution file is attached, the electronic apparatus is enabled to confirm whether each execution file is modulated, and if some of the files are confirmed as modulated, accessing the resource may be restricted from the execution files of which modulation is confirmed and not from the entirety of the application, thereby improving the efficiency of driving the application.

FIG. 4 is a view provided to explain an access control system of an electronic apparatus according to an embodiment of the present disclosure. Specifically, FIG. 4 illustrates an embodiment where the resource necessary for driving an application is an external server that is separate from the electronic apparatus or another electronic apparatus. This embodiment is applicable to a firewall, where the application controls accessing the resource existing outside the electronic apparatus 100 through a network, thereby preventing beforehand security problems such as information leakage, system destruction and the like.

Referring to FIG. 4, the access control system according to the present embodiment may include an electronic apparatus 100, an external server 200 and a network 10 connecting the external server 200 and the electronic apparatus 100.

The electronic apparatus 100 may include a storage 110 and a processor 120. Here, the storage 110 may store an application package 111 that includes an execution file package 112. Here, the execution file package 112 may include an execution file, access control information and an electronic signature. The structure of the execution file package 112 is illustrated I FIG. 3, and thus repeated explanation will be omitted.

When an application execution command is input, the processor 120 may certify the electronic signature included in the execution file package 112 and determine access authority in the execution file. Here, the access authority may relate to whether to allow the application to access the external server 200 existing outside the electronic apparatus 100. Further, the processor 120 may enable the application to access the external server 200 using the access control information of the execution file of which access authority is granted. Here, the application accessing the external server 200 may mean the processor 120 using the execution file and access control information of the application and accessing the external server 200 to control operations of the external server 200, or collecting information from the external server 200 and processing the same.

Meanwhile, the processor 120 may access the external server 200 through the network 10. In FIG. 4, it was illustrated that the network 10 is the internet for convenience of explanation, but there is no limitation thereto, and thus various networks such as local networks may be used. Accordingly, the external server 200 may be a server that may be accessed through an internet site, or another electronic apparatus that may be connected through a local network.

Meanwhile, in FIG. 4, it was illustrated that the processor 120 access the external server 200 through the network 10 for convenience of explanation, but the processor 120 may be realized such that it controls a communicator (not illustrated) to access the external server 200 through a wired or wireless network.

Meanwhile, in FIG. 4, the electronic apparatus 100 has the same configuration as the electronic apparatus of FIGs. 1 to 3, and thus repeated explanation will be omitted.

FIG. 5 is a flowchart provided to explain a method for controlling an electronic apparatus according to an embodiment of the present disclosure.

Referring to FIG. 5, the electronic apparatus stores an execution file (S510). Specifically, the electronic apparatus may install an application, and store the execution file that includes access control information of the application. Here, the access control information is information on the execution file to which the access control information is attached, and may not include the access control information of other execution files.

Next, the electronic apparatus may receive input of an execution command (S520). Specifically, the electronic apparatus may receive the execution command through an inputter provided in the electronic apparatus. Here, the inputter may be a touch screen that may receive a user's touch input, a physical button provided in the electronic apparatus, a mouse or an input port that may receive input of a keyboard, etc.

Next, the electronic apparatus may control the access authority regarding a resource of the execution file included in the application program (S530). Specifically, the electronic apparatus may confirm the execution file included in the application, and whether the execution file and access control information are modulated using the access control information and electronic signature, and if the execution file and access control information are certified as not modulated, the electronic apparatus may grant the access authority regarding the resource of the execution file included in the application program. Specifically, this may be granting the resource access authority to unmodulated execution files. Meanwhile, when it is confirmed that the execution file and access control information are modulated, the electronic apparatus may restrict the resource access from the modulated execution file.

Next, the electronic apparatus may drive the application using the execution file corresponding to the determined resource access authority and application (S540). Specifically, when the resource access authority for the unmodulated resource execution file is granted through electronic signature certification, the electronic apparatus may drive the application using the granted resource access authority and the execution file.

As such, according to the present disclosure, since the access control information is included per execution file, and the access authority is granted through certification of the encoded electronic signature, it is easy to confirm modulation per execution file, thereby strengthening protection from security problems that occur during execution of applications that include modulated execution files.

FIG. 6 is a flowchart illustrating a method for electronic signature certification of an electronic apparatus according to an embodiment of the present disclosure.

Referring to FIG. 6, first of all, the electronic apparatus may receive input of an application execution command (S610).

Next, the electronic apparatus may certify an electronic signature to determine resource access authority regarding the application. Specifically, after the application execution command is input, the electronic apparatus may compute a hash code regarding an execution file 310 and access control information 320 included in the execution file 310 using a hash function.

Next, the electronic apparatus may encode the electronic signature 340 with a public key and compute the hash code (S630). Here, the electronic signature 340 may be one that is encoded by a private key of the manufacturer of the application from the hash code computed regarding the execution file 310 and access control information 320 at the time the application was manufactured.

Next, the electronic apparatus may determine whether there is a modulation by comparing the hash code computed at S620 and the hash code computed by encoding the electronic signature 340 at S630 (S640).

Here, if the hash code computed at S620 and the hash code computed by encoding the electronic signature 340 at S630 do not correspond to each other, the electronic apparatus may determine that at least one of the execution file 310 and access control information 320 is modulated (S640-Y), and restrict the modulated execution file access regarding the resource(S650).

Meanwhile, if the hash code computed at S620 and the hash code computed by encoding the electronic signature 340 at S630 correspond to each other, the electronic apparatus may determine that the execution file 310 and access control information 320 have not been modulated (S640-N), and grant access authority regarding the resource to the execution file that is certified as a normal execution file (S660).

Here, although not illustrated, the electronic apparatus may temporarily store the access control information of the execution file of which the resource access authority is granted in the volatile memory of the processor.

As aforementioned, according to various embodiments of the present disclosure, by incorporating the access control information per execution file and granting access authority through certification of an electronic signature that is encoded therefrom, it is possible to easily confirm whether each execution file is modulated, thereby strengthening protection from security problems that occur when executing the application including the modulated execution file.

Further, the aforementioned method for controlling an electronic apparatus may be realized as at least one execution program (or application) for executing the aforementioned controlling method, and such an execution program may be stored in and provided through a computer readable recording medium.

The computer readable recording medium refers to not a medium that stores data for a short period of time such as a register, cache, memory and the like, but a medium readable by a device and that stores data semi-permanently. Specifically, the aforementioned various applications or programs may be stored in and provided through a computer readable medium such as CD, DVD, hard disk, blue-ray disk, USB, memory card, ROM and the like.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. An electronic apparatus (100) comprising:
a storage (110) configured to store an application that includes an execution file (310) for executing the application, access control information (320) comprising information on a resource (130) of the electronic apparatus (100) accessible by the execution file and an electronic signature (340) encoding the execution file (310) and the access control information (320); and
a processor (120) configured to:
in response to an execution command for executing the application being input, identify whether the execution file (310) of the application and the access control information (320) of the application are changed based on the electronic signature (340), and
based on identifying that the execution file (310) of the application and the access control information (320) of the application are not changed, execute the execution file (310) and grant the execution file (310) to access the resource of the electronic apparatus (100).

2. The electronic apparatus according to claim 1,
wherein the access control information (320) is included in the execution file (310).

3. The electronic apparatus according to claim 1,
wherein the execution file (310) includes the electronic signature (340) encoded from the execution file (310) and the access control information (320) based on a predetermined algorithm, and
the processor (120) determines whether the execution file (310) and the access control information (320) are modulated using the electronic signature (340), and grants an access authority of the resource (130) of the electronic apparatus (100) to the stored application according to a result of determination of modulation.

4. The electronic apparatus (100) according to claim 3,
wherein the predetermined algorithm includes a hash function, and
the electronic signature (340) is a value encoded from a hash code regarding the execution file (310) and the access control information (320) by using a private key, the hash code being computed using the hash function.

5. The electronic apparatus (100) according to claim 4,
wherein the storage (110) stores a public key corresponding to the private key, and
the processor (120), in response to the execution command regarding the stored application being input, computes the hash code regarding the execution file (310) and the access control information (320) using the hash function, and determines whether modulation is made by comparing the hash code computed after the execution command is input and the hash code encoded from the electronic signature (340) using the public key.

6. The electronic apparatus (100) according to claim 6,
wherein the resource (130) of the electronic apparatus (100) includes at least one of location information of the electronic apparatus (100), a camera, a microphone, a speaker, and a stored file, and an external server (200) connected to the electronic apparatus (100).

7. The electronic apparatus (100) according to claim 1,
wherein the plurality of execution files each including at least one access control information (320), and the processor (120), in response to at least one of a plurality of access control information being changed, updates only the access control information (320) included in the execution file (310) of which the access control information (320) is changed, of the plurality of execution files.

8. The electronic apparatus (100) according to claim 1,
wherein the processor (120) further includes a volatile memory to temporarily store data, and stores the access control information (320) included in the execution file (310) of which the access authority regarding the resource (130) is granted, in the volatile memory.

9. A method for controlling an electronic apparatus (100), the method comprising:
storing an application that includes an execution file (310) for executing the application, access control information (320) comprising information on a resource (130) of the electronic apparatus (100) accessible by the execution file and an electronic signature (340) encoding the execution file (310) and the access control information (320);
receiving input of an execution command for executing the application;
identifying whether the execution file (310) of the application and the access control information (320) of the application are changed based on the electronic signature (340); and
based on identifying that the execution file (310) of the application and the access control information (320) of the application are not changed, execute the execution file (310) and grant the execution file (310) to access the resource of the electronic apparatus (100).

10. The method according to claim 9,
wherein the access control information (320) is included in the execution file (310).

11. The method according to claim 9,
wherein the execution file (310) includes the electronic signature (340) encoded from the execution (310) file and the access control information (320) based on a predetermined algorithm, and
the controlling of access of the execution file (310) regarding the resource (130) includes:
determining whether the execution file (310) and the access control information (320) are modulated using the electronic signature (340); and
granting the access authority regarding the resource (130) of the electronic apparatus (100) to the stored application according to a result of determination of modulation.

12. The method according to claim 11,
wherein the predetermined algorithm includes a hash function, and
the electronic signature (340) is a value encoded from a hash code regarding the execution file (310) and the access control information (320) by using a private key, the hash code being computed using the hash function.

13. The method according to claim 12,
further comprising storing a public key corresponding to the private key, and
the determining of whether the execution file (310) and the access control information (320) are modulated includes:
in response to the execution command regarding the stored application being input, computing the hash code regarding the execution file (310) and the access control information (320) using the hash function;
encoding the electronic signature (340) using the public key; and
determining whether modulation is made by comparing the hash code computed after the execution command is input and the hash code encoded from the electronic signature (340).

14. The method according to claim 11,
wherein the resource (130) of the electronic apparatus (100) includes at least one of location information of the electronic apparatus (100), a camera, a microphone, a speaker, and a stored file, and an external server (200) connected to the electronic apparatus (100).

15. The method according to claim 11,
wherein the plurality of execution files each including at least one access control information (320), and
the method further comprises, in response to at least one of a plurality of access control information being changed, updating only the access control information (320) included in the execution file (310) of which the access control information (320) is changed, of the plurality of execution files.

## Patentansprüche

1. Elektronische Vorrichtung (100), umfassend:
einen Speicher (110), der dazu ausgestaltet ist, eine Anwendung, die eine Ausführungsdatei (310) zum Ausführen der Anwendung umfasst, Zugriffssteuerungsinformationen (320), die Informationen über eine für die Ausführungsdatei zugängliche Ressource (130) der elektronischen Vorrichtung (100) umfasst, und eine elektronische Signatur (340), welche die Ausführungsdatei (310) und die Zugriffssteuerungsinformationen (320) codiert, zu speichern; und
einen Prozessor (120), der für Folgendes ausgestaltet ist:
in Reaktion auf die Eingabe eines Ausführungsbefehls zum Ausführen der Anwendung, Ermitteln, ob die Ausführungsdatei (310) der Anwendung und die Zugriffssteuerungsinformationen (320) der Anwendung geändert sind, basierend auf der elektronischen Signatur (340) und
basierend darauf, dass ermittelt wird, dass die Ausführungsdatei (310) der Anwendung und die Zugriffssteuerungsinformationen (320) der Anwendung nicht geändert sind, Ausführen der Ausführungsdatei (310) und Gewähren von Zugriff auf die Ressource der elektronischen Vorrichtung (100) für die Ausführungsdatei (310).

2. Elektronische Vorrichtung nach Anspruch 1,
wobei die Zugriffssteuerungsinformationen (320) in der Ausführungsdatei (310) enthalten sind.

3. Elektronische Vorrichtung nach Anspruch 1,
wobei die Ausführungsdatei (310) die elektronische Signatur (340), codiert aus der Ausführungsdatei (310) und den Zugriffssteuerungsinformationen (320) basierend auf einem vorgegebenen Algorithmus, enthält, und
der Prozessor (120) unter Verwendung der elektronischen Signatur (340) bestimmt, ob die Ausführungsdatei (310) und die Zugriffssteuerungsinformationen (320) verändert sind, und gemäß einem Ergebnis der Veränderungsbestimmung eine Zugriffsberechtigung bezüglich der Ressource (130) der elektronischen Vorrichtung (100) für die gespeicherte Anwendung gewährt.

4. Elektronische Vorrichtung (100) nach Anspruch 3,
wobei der vorgegebene Algorithmus eine Hashfunktion umfasst und
die elektronische Signatur (340) ein Wert ist, der aus einem Hashcode bezüglich der Ausführungsdatei (310) und der Zugriffssteuerungsinformationen (320) unter Verwendung eines privaten Schlüssels codiert wird, wobei der Hashcode unter Verwendung der Hashfunktion berechnet wird.

5. Elektronische Vorrichtung (100) nach Anspruch 4,
wobei der Speicher (110) einen öffentlichen Schlüssel speichert, der dem privaten Schlüssel entspricht, und
der Prozessor (120) in Reaktion auf die Eingabe des Ausführungsbefehls bezüglich der gespeicherten Anwendung den Hashcode bezüglich der Ausführungsdatei (310) und der Zugriffssteuerungsinformationen (320) unter Verwendung der Hashfunktion berechnet und durch Vergleichen des nach der Eingabe des Ausführungsbefehls berechneten Hashcodes und des aus der elektronischen Signatur (340) unter Verwendung des öffentlichen Schlüssels codierten Hashcodes bestimmt, ob eine Veränderung vorgenommen wurde.

6. Elektronische Vorrichtung (100) nach Anspruch 6,
wobei die Ressource (130) der elektronischen Vorrichtung (100) wenigstens eines aus Standortinformationen der elektronischen Vorrichtung (100), einer Kamera, einem Mikrofon, einem Lautsprecher und einer gespeicherten Datei und einem externen Server (200), der mit der elektronischen Vorrichtung (100) verbunden ist, umfasst.

7. Elektronische Vorrichtung (100) nach Anspruch 1,
wobei die Mehrzahl von Ausführungsdateien jeweils wenigstens eine Zugriffssteuerungsinformation (320) umfasst und der Prozessor (120) in Reaktion auf eine Änderung wenigstens einer aus einer Mehrzahl von Zugriffssteuerungsinformationen nur die Zugriffssteuerungsinformationen (320) aktualisiert, die in der Ausführungsdatei (310) mit geänderten Zugriffssteuerungsinformationen (320) aus der Mehrzahl von Ausführungsdateien enthalten sind.

8. Elektronische Vorrichtung (100) nach Anspruch 1,
wobei der Prozessor (120) ferner einen flüchtigen Speicher zum vorübergehenden Speichern von Daten umfasst und die Zugriffssteuerungsinformationen (320), die in der Ausführungsdatei (310), für welche die Zugriffsberechtigung bezüglich der Ressource (130) gewährt wird, in dem flüchtigen Speicher speichert.

9. Verfahren zur Steuerung einer elektronischen Vorrichtung (100), wobei das Verfahren umfasst:
Speichern einer Anwendung, die eine Ausführungsdatei (310) zum Ausführen der Anwendung umfasst, von Zugriffssteuerungsinformationen (320), die Informationen über eine Ressource (130) der elektronischen Vorrichtung (100), die für die Ausführungsdatei zugänglich ist, umfassen, und einer elektronischen Signatur (340), welche die Ausführungsdatei (310) und die Zugriffssteuerungsinformationen (320) codiert;
Empfangen einer Eingabe eines Ausführungsbefehls zum Ausführen der Anwendung;
Ermitteln, ob die Ausführungsdatei (310) der Anwendung und die Zugriffssteuerungsinformationen (320) der Anwendung geändert sind, basierend auf der elektronischen Signatur (340); und
basierend darauf, dass ermittelt wird, dass die Ausführungsdatei (310) der Anwendung und die Zugriffssteuerungsinformationen (320) der Anwendung nicht geändert sind, Ausführen der Ausführungsdatei (310) und Gewähren von Zugriff auf die Ressource der elektronischen Vorrichtung (100) für die Ausführungsdatei (310).

10. Verfahren nach Anspruch 9,
wobei die Zugriffssteuerungsinformationen (320) in der Ausführungsdatei (310) enthalten sind.

11. Verfahren nach Anspruch 9,
wobei die Ausführungsdatei (310) die elektronische Signatur (340), codiert aus der Ausführungsdatei (310) und den Zugriffssteuerungsinformationen (320) basierend auf einem vorgegebenen Algorithmus, enthält und
das Steuern des Zugriffs der Ausführungsdatei (310) bezüglich der Ressource (130) umfasst:
Bestimmen, ob die Ausführungsdatei (310) und die Zugriffssteuerungsinformationen (320) verändert sind, unter Verwendung der elektronischen Signatur (340); und
Gewähren der Zugriffsberechtigung bezüglich der Ressource (130) der elektronischen Vorrichtung (100) für die gespeicherte Anwendung gemäß einem Ergebnis der Veränderungsbestimmung.

12. Verfahren nach Anspruch 11,
wobei der vorgegebene Algorithmus eine Hashfunktion umfasst und
die elektronische Signatur (340) ein Wert ist, der aus einem Hashcode bezüglich der Ausführungsdatei (310) und der Zugriffssteuerungsinformationen (320) unter Verwendung eines privaten Schlüssels codiert wird, wobei der Hashcode unter Verwendung der Hashfunktion berechnet wird.

13. Verfahren nach Anspruch 12,
das ferner ein Speichern eines öffentlichen Schlüssel umfasst, der dem privaten Schlüssel entspricht, und
wobei das Bestimmen, ob die Ausführungsdatei (310) und die Zugriffssteuerungsinformationen (320) verändert sind, umfasst:
in Reaktion auf die Eingabe des Ausführungsbefehls bezüglich der gespeicherten Anwendung,
Berechnen des Hashcodes bezüglich der Ausführungsdatei (310) und der Zugriffssteuerungsinformationen (320) unter Verwendung der Hashfunktion;
Codieren der elektronischen Signatur (340) unter Verwendung des öffentlichen Schlüssels; und
Bestimmen, ob eine Veränderung vorgenommen wurde, durch Vergleichen des nach der Eingabe des Ausführungsbefehls berechneten Hashcodes und des aus der elektronischen Signatur (340) codierten Hashcodes.

14. Verfahren nach Anspruch 11,
wobei die Ressource (130) der elektronischen Vorrichtung (100) wenigstens eines aus Standortinformationen der elektronischen Vorrichtung (100), einer Kamera, einem Mikrofon, einem Lautsprecher und einer gespeicherten Datei und einem externen Server (200), der mit der elektronischen Vorrichtung (100) verbunden ist, umfasst.

15. Verfahren nach Anspruch 11,
wobei die Mehrzahl von Ausführungsdateien jeweils wenigstens eine Zugriffssteuerungsinformation (320) umfassen und
das Verfahren ferner umfasst, dass in Reaktion auf eine Änderung wenigstens einer aus einer Mehrzahl von Zugriffssteuerungsinformationen nur die Zugriffssteuerungsinformationen (320) aktualisiert werden, die in der Ausführungsdatei (310) mit geänderten Zugriffssteuerungsinformationen (320) aus der Mehrzahl von Ausführungsdateien enthalten sind.

## Revendications

1. Appareil électronique (100) comprenant :
une mémoire (110) configurée pour stocker une application qui inclut un fichier d'exécution (310) pour exécuter l'application, des informations de contrôle d'accès (320) comprenant des informations sur une ressource (130) de l'appareil électronique (100) accessible par le fichier d'exécution et une signature électronique (340) qui encode le fichier d'exécution (310) et les informations de contrôle d'accès (320) ; et
un processeur (120) configuré pour :
en réponse à la saisie d'une instruction d'exécution pour exécuter l'application, identifier si le fichier d'exécution (310) de l'application et les informations de contrôle d'accès (320) de l'application sont modifiés sur la base de la signature électronique (340), et
sur la base de l'identification selon laquelle le fichier d'exécution (310) de l'application et les informations de contrôle d'accès (320) de l'application ne sont pas modifiés, exécuter le fichier d'exécution (310) et accorder au fichier d'exécution (310) l'accès à la ressource de l'appareil électronique (100).

2. Appareil électronique selon la revendication 1,
dans lequel les informations de contrôle d'accès (320) sont incluses dans le fichier d'exécution (310).

3. Appareil électronique selon la revendication 1,
dans lequel le fichier d'exécution (310) inclut la signature électronique (340) encodée à partir du fichier d'exécution (310) et des informations de contrôle d'accès (320) sur la base d'un algorithme prédéfini, et
le processeur (120) détermine si le fichier d'exécution (310) et les informations de contrôle d'accès (320) sont modulés au moyen de la signature électronique (340), et accorde à l'application stockée une autorisation d'accès concernant la ressource (130) de l'appareil électronique (100) selon un résultat de la détermination de la modulation.

4. Appareil électronique (100) selon la revendication 3,
dans lequel l'algorithme prédéfini inclut une fonction de hachage, et
la signature électronique (340) est une valeur encodée à partir d'un code de hachage concernant le fichier d'exécution (310) et les informations de contrôle d'accès (320) au moyen d'une clé privée, le code de hachage étant calculé au moyen de la fonction de hachage.

5. Appareil électronique (100) selon la revendication 4,
dans lequel la mémoire (110) stocke une clé publique correspondant à la clé privée, et
le processeur (120), en réponse à la saisie de l'instruction d'exécution concernant l'application stockée, calcule le code de hachage concernant le fichier d'exécution (310) et les informations de contrôle d'accès (320) au moyen de la fonction de hachage, et détermine si une modulation a été effectuée en comparant le code de hachage calculé après la saisie de l'instruction d'exécution et le code de hachage encodé à partir de la signature électronique (340) au moyen de la clé publique.

6. Appareil électronique (100) selon la revendication 6,
dans lequel la ressource (130) de l'appareil électronique (100) inclut au moins un élément parmi des informations de localisation de l'appareil électronique (100), une caméra, un microphone, un haut-parleur et un fichier stocké, et un serveur externe (200) connecté à l'appareil électronique (100).

7. Appareil électronique (100) selon la revendication 1,
dans lequel chacun de la pluralité de fichiers d'exécution inclut au moins une information de contrôle d'accès (320), et le processeur (120), en réponse à la modification d'au moins une d'une pluralité d'informations de contrôle d'accès, met à jour uniquement les informations de contrôle d'accès (320) incluses dans le fichier d'exécution (310) dont l'information de contrôle d'accès (320) est modifiée, de la pluralité de fichiers d'exécution.

8. Appareil électronique (100) selon la revendication 1,
dans lequel le processeur (120) inclut en outre une mémoire volatile pour stocker temporairement des données, et stocke les informations de contrôle d'accès (320) incluses dans le fichier d'exécution (310) pour lequel est accordée l'autorisation d'accès concernant la ressource (130), dans la mémoire volatile.

9. Procédé de contrôle d'un appareil électronique (100), le procédé comprenant :
le stockage d'une application qui inclut un fichier d'exécution (310) pour exécuter l'application, des informations de contrôle d'accès (320) comprenant des informations sur une ressource (130) de l'appareil électronique (100) accessible par le fichier d'exécution et une signature électronique (340) qui encode le fichier d'exécution (310) et les informations de contrôle d'accès (320) ;
la réception d'une saisie d'une instruction d'exécution pour exécuter l'application ;
l'identification si le fichier d'exécution (310) de l'application et les informations de contrôle d'accès (320) de l'application sont modifiés sur la base de la signature électronique (340) ; et
sur la base de l'identification selon laquelle le fichier d'exécution (310) de l'application et les informations de contrôle d'accès (320) de l'application ne sont pas modifiés, l'exécution du fichier d'exécution (310) et l'octroi au fichier d'exécution (310) de l'accès à la ressource de l'appareil électronique (100).

10. Procédé selon la revendication 9,
dans lequel les informations de contrôle d'accès (320) sont incluses dans le fichier d'exécution (310).

11. Procédé selon la revendication 9,
dans lequel le fichier d'exécution (310) inclut la signature électronique (340) encodée à partir du fichier d'exécution (310) et des informations de contrôle d'accès (320) sur la base d'un algorithme prédéfini, et
le contrôle de l'accès du fichier d'exécution (310) concernant la ressource (130) inclut :
la détermination si le fichier d'exécution (310) et les informations de contrôle d'accès (320) sont modulés au moyen de la signature électronique (340) ; et
l'octroi à l'application enregistrée de l'autorisation d'accès concernant la ressource (130) de l'appareil électronique (100) selon un résultat de la détermination de la modulation.

12. Procédé selon la revendication 11,
dans lequel l'algorithme prédéfini inclut une fonction de hachage, et
la signature électronique (340) est une valeur encodée à partir d'un code de hachage concernant le fichier d'exécution (310) et les informations de contrôle d'accès (320) au moyen d'une clé privée, le code de hachage étant calculé au moyen de la fonction de hachage.

13. Procédé selon la revendication 12,
comprenant en outre le stockage d'une clé publique correspondant à la clé privée, et
la détermination si le fichier d'exécution (310) et les informations de contrôle d'accès (320) sont modulés inclut :
en réponse à la saisie de l'instruction d'exécution concernant l'application stockée, le calcul du code de hachage concernant le fichier d'exécution (310) et les informations de contrôle d'accès (320) au moyen de la fonction de hachage ;
l'encodage de la signature électronique (340) au moyen de la clé publique ; et
la détermination si une modulation a été effectuée en comparant le code de hachage calculé après la saisie de l'instruction d'exécution et le code de hachage encodé à partir de la signature électronique (340).

14. Procédé selon la revendication 11,
dans lequel la ressource (130) de l'appareil électronique (100) inclut au moins un élément parmi des informations de localisation de l'appareil électronique (100), une caméra, un microphone, un haut-parleur et un fichier stocké, et un serveur externe (200) connecté à l'appareil électronique (100).

15. Procédé selon la revendication 11,
dans lequel chacun de la pluralité de fichiers d'exécution inclut au moins une information de contrôle d'accès (320), et
le procédé comprend en outre, en réponse à la modification d'au moins une d'une pluralité d'informations de contrôle d'accès, la mise à jour uniquement des informations de contrôle d'accès (320) incluses dans le fichier d'exécution (310) dont l'information de contrôle d'accès (320) est modifiée, de la pluralité de fichiers d'exécution.
